# EUROPÄISCHE PATENTSCHRIFT

(11) **EP 2 651 796 B1**
(45) Veröffentlichungstag und Bekanntmachung des Hinweises auf die Patenterteilung: **28.02.2018**
(21) Anmeldenummer: 11802061.9
(22) Anmeldetag: 16.12.2011
(51) Int. Cl.: B65G 67/20, B65D 19/42, B65D 19/00

(54) **LOGISTIKSYSTEM-PLATTFORM**
LOGISTIC SYSTEM PLATFORM
PLATFORME DE SYSTÈME LOGISTIQUE

(30) Priorität: 16.12.2010 DE 102010063310
(43) Veröffentlichungstag der Anmeldung: 23.10.2013
(73) Patentinhaber: Buse, Heinz, 26160 Bad Zwischenahn (DE)
(72) Erfinder: Buse, Heinz, 26160 Bad Zwischenahn (DE)
(74) Vertreter: Eisenführ Speiser
(86) Internationale Anmeldenummer: PCT/EP2011/073125
(87) Internationale Veröffentlichungsnummer: WO 2012/080499

(56) Entgegenhaltungen:
- EP-A2- 1 808 387
- WO-A1-2005/049461
- DE-A1- 2 501 414
- DE-U1-202009 009 055
- DE-U1-202009 016 799
- FR-A1- 2 927 617
- GB-A- 2 447 503
- US-A- 3 592 145
- US-A- 3 690 485
- US-A1- 2008 213 058
- US-A1- 2008 250 986

## Beschreibung

Die vorliegende Erfindung betrifft eine Logistiksystem-Plattform.

Bei bereits vorhandenen Lagern oder Kommissionierungseinheiten gibt es eine Vielzahl von Andockstationen (auch als Hallentore bezeichnet), an die die Lkws jeweils mit ihrer Rückseite heranfahren können, um die Güter zu übernehmen. Solche Güterlager oder Kommissionierungseinheiten bestehen in einer großen Vielzahl und häufig gibt es die Möglichkeit, dass eine Vielzahl von Fahrzeugen gleichzeitig an die Andockstationen, die jeweils in einer Gebäudewand miteinander fluchtend nebeneinanderliegen, heranfährt. So können ebenso viele Lkws andocken, wie entsprechende Andockstationen, also Gebäudewandöffnungen/Hallentore, vorhanden sind. Dabei sind diese Andockstationen meist auf der Höhe der Ladeflächen der Lkws angeordnet, damit der Lagerboden und die Ladefläche des Lkws eine Ebene bilden und der Lkw z.B. durch das Befahren durch Gabelstapler ent- und beladen werden kann. Da bei dieser Art des Ent- und Beladens jeder Gabelstapler oder sonstige Transporteinrichtung lediglich eine oder einige wenige Warenpalletten transportieren kann, ist die Art des Be- und Entladens sehr zeitintensiv. Auch kann der zu be- und entladende Lkw während der gesamten Zeit des Be- und Entladens nicht von der Andockstation wegbewegt werden.

Mit dem Logistiksystem des Dokuments EP 1 808 387 A2, wird ein System mit einer Plattform nach dem Oberbegriff nach Anspruch 1 offenbart, bei dem die zu be- und entladende Fracht auf einer Güterplattform, auch als Plattform oder Ladungsträger bezeichnet, gelagert wird und die gesamte Plattform mitsamt der Fracht vom Lkw bzw. auf den Lkw in einem Arbeitsvorgang verfrachtet wird. D.h. die gesamte Plattform mit den Gütern ist in einem Schritt an ein Fahrzeug übergebbar oder kann in einem Schritt von einem Fahrzeug übernommen werden.

Aus den Entgegenhaltungen DE 25 01 414 A1. DE 20 2009 009055 U1. US 3,592,145 A, US 2008/213058 A1, DE 20 2009 016799, US 3,690,485 A, US 2008/250986 A1, und WO 2005/049461 A1 sind Plattformen bekannt. Aus der FR 2 927 617 ist eine Logistiksystem-Plattform nach dem Oberbegriff des Anspruchs 1 bekannt. Der Erfindung liegt die Aufgabe zugrunde, die Logistiksystem-Plattform weiter zu verbessern.

Erfindungsgemäß wird diese Aufgabe durch eine Plattform mit den Merkmalen nach Anspruch 1, gelöst. Vorteilhafte Weiterbildungen sind in den Unteransprüchen beschrieben.

Somit wird erfindungsgemäß eine Logistiksystem-Plattform nach Anspruch 1 vorgeschlagen, die dazu eingerichtet ist, auf die Ladefläche eines Fahrzeugs in einer Beförderungsrichtung übergeben und von der Ladefläche eines Fahrzeugs in einer Beförderungsrichtung übernommen zu werden. Die Plattform weist im Wesentlichen Ausmaße auf, die der Ladefläche des Fahrzeugs angepasst sind. Die Plattform weist wenigstens ein erstes Plattformelement und ein zweites Plattformelement auf, die miteinander verriegelbar aber auch voneinander lösbar sind. Das erste Plattformelement weist ein Verriegelungselement und das zweite Plattformelement eine dem Verriegelungselement gegenüberliegend vorgesehene Verriegelungsaufnahme derart auf, dass die Verriegelungsaufnahme des zweiten Plattformelements in das Verriegelungselement des ersten Plattformelements einrasten kann.

Vorteilhaft ist bei der erfindungsgemäßen Plattform, dass diese modular aufgebaut ist. So können die einzelnen Plattformelemente zu einer Plattform zusammengesetzt und so die Größe der Plattform verschiedenen Ladeflächengrößen oder Verwendungszwecken angepasst werden. Durch das Einrasten eines Plattformelements in ein anderes kann eine einfache, schnelle und robuste Verbindung zwischen den Plattformelementen hergestellt werden. Auch kann diese Verbindung wieder gelöst werden.

Ferner kann eine bereits beladene Plattform so durch weitere Plattformelemente verlängert werden, da durch das Einrasten zum Zusammenfügen der Plattformelemente keine Eingriffe oder Montagevorgänge an der ersten, beladenen Plattform erforderlich sind.

Gemäß einem Aspekt der Erfindung sind das Verriegelungselement des ersten Plattformelements und die Verriegelungsaufnahme des zweiten Plattformelements jeweils an der Unterseite des Plattformelements vorgesehen. In dieser Anordnung wird die Oberfläche der Plattform, auf der Güter und Waren vorgesehen werden können, nicht durch die Verriegelungselemente beeinträchtigt oder gestört.

Das erste Plattformelement weist eine Aussparung auf, in die ein Vorsprung des zweiten Plattformelements durch eine Schwenkbewegung um eine horizontale Achse senkrecht zur Beförderungsrichtung eingreifen kann. Auf diese Weise wird ein Einrasten des zweiten Plattformelements in das erste Plattformelement ermöglicht, wie es z.B. von Klick-Laminat bekannt ist. Dabei dient die Aussparung sowohl zur Positionierung des zweiten Plattformelements gegenüber dem ersten Plattformelement als auch zur Führung der Schwenkbewegung und ebenso als weitere Halterung zwischen beiden Plattformelementen im verriegelten Zustand.

Die Plattform weist vorzugsweise an wenigstens einer seitlichen Kante eine um die vertikale Achse drehbar vorgesehene Rolle auf, die über die seitlichen Ausmaße der Plattform hervortretend ausgebildet ist.

Vorteilhaft ist bei dieser erfindungsgemäßen Plattform, dass durch die seitlich vorgesehene Rolle eine seitliche Führung und Abstützung z.B. gegenüber einer Seitenwand der Ladefläche eines Fahrzeugs oder der seitlichen Begrenzung einer Übergabestation erfolgen kann, die zum Übergeben bzw. Übernehmen der Plattform auf bzw. von der Ladefläche eines Fahrzeugs vorgesehen ist. Hierdurch kann die seitliche Führung der Plattform während des Übergabe- bzw. Übernahmevorgangs verbessert werden, da die Möglichkeit eines Verklemmens oder Verkantens der Plattform reduziert wird.

Vorzugsweise ist wenigstens eine Rolle an einer Ecke der Plattform vorgesehen. Hierdurch kann die seitliche Führung der Plattform über die gesamte Bewegung sichergestellt werden, da die Ecken der Plattform als erstes mit z.B. der seitlichen Begrenzung einer Übergabestation in Kontakt kommen. Insbesondere kann durch wenigstens eine seitliche Rolle an einer Ecke der Plattform das Einführen z.B. in die Übergabestation erleichtert werden, da hierbei eher ein Verklemmen oder Verkanten auftreten kann als während der Beförderungsbewegung.

Die Plattform weist vorzugsweise ein Eingriffsmittel auf, in das ein Beförderungsmittel eingreifen kann, um die Plattform von der Ladefläche des Fahrzeugs in der Beförderungsrichtung zu ziehen.

Vorteilhaft ist hierbei, dass die Plattform durch ihr Eingriffsmittel schnell und einfach von der Ladefläche eines Fahrzeugs oder auch aus einer Übergabestation oder einem Speicher oder dergleichen, in dem leere bzw. beladene Plattformen gelagert werden können, herunter- bzw. herausbewegt werden kann.

Vorzugsweise weist die Plattform eine Druckfeder auf, um das Eingriffsmittel in der Beförderungsrichtung aus der Plattform herauszudrücken. Hierdurch kann das Eingriffsmittel in eine Eingriffsposition gebracht werden, so dass das Beförderungsmittel die Plattform einfach und sicher greifen und ziehen kann.

Vorzugsweise ist die Plattform derart vorgesehen und die Druckfeder derart dimensioniert, dass das Eingriffsmittel vollständig in die Plattform hineingedrückt und durch die Plattform aufgenommen werden kann: Auf diese Weise kann das Eingriffsmittel in dem durch die Druckfeder herausgedrückten Zustand so aus der Plattform herausragen, dass es sicher, einfach und schnell durch ein Beförderungsmittel gegriffen werden kann, und gleichzeitig so in die Plattform eingedrückt werden, dass es nicht über diese hinausragt, beschädigt werden kann oder stört. So kann z.B. die Plattform, die Druckfeder und das Eingriffsmittel derart vorgesehen und dimensioniert sein, dass das Eingriffsmittel durch z.B. die Ladebühne des Fahrzeugs eingedrückt wird und so nicht störend über die hintere Kante der Plattform hervorsteht und das Schließen der Ladeflächenwand oder Hochklappen der Ladebühne behindert. Ferner kann bei dem Absenken der Ladefläche das Eingriffsmittel durch die Druckfeder aus der Plattform herausgedrückt werden, so dass es sofort, d.h. nach dem Öffnen der Ladefläche oder Absenken der Ladebühne, ohne zusätzlichen Eingriff eines Bedieners einsatzbereit ist, um die Plattform von der Ladefläche des Fahrzeugs herunterzuziehen.

Vorzugsweise weist die Plattform mehrere in Rollenkästen eingelassene Rollen auf, um auf diesen Rollen in der Beförderungsrichtung verfahren zu werden. Durch die Rollen kann die Verfahrbarkeit der Plattform erreicht werden. Durch das Einlassen der Rollen in Rollenkästen in der Plattform kann eine kompakte und flache Bauweise erreicht werden.

Vorzugsweise weist die Plattform mit Rollen und Rollenkästen eine Gesamthöhe von höchstens 50 mm auf. Hierdurch kann eine sehr flache und kompakte Bauweise der Plattform erreicht werden, die nicht mehr Höhe als unbedingt nötig auf der Ladefläche eines Fahrzeugs einnimmt.

Vorzugsweise besteht die Plattform im Wesentlichen aus Aluminium. Hierdurch kann die Plattform sehr leicht vorgesehen werden, um den Beförderungsvorgang möglichst einfach und mit geringen Antriebs- bzw. Zugkräften der Beförderungsmittel ausführen zu können. Auch wird hierdurch möglichst wenig zusätzliches Gewicht durch das Fahrzeug befördert.

Vorzugsweise lässt sich der Ladungsträger mit allen gängigen Flurförderfahrzeugen befahren. Auf diese Weise kann das Be- und Entladen des Ladungsträgers mit Flurförderfahrzeugen erfolgen bzw. durch diese unterstützt werden.

Vorzugsweise ist die Plattform mit einer beladenen (25 t) Plattform befahrbar. Dies bedeutet, dass sich ein komplett beladener Ladungsträger (25 t) über einen leeren Ladungsträger ziehen/rollen lässt (Sandwich-Prinzip). Auf diese Weise kann ein beladener Ladungsträger (Plattform) über einen unbeladenen Ladungsträger herüber befördert werden, um zwei Ladungsträger platzsparend gegeneinander auf der Ladefläche eines Fahrzeugs und bzw. oder in einer Aufnahme einer Übergabestation gegeneinander austauschen zu können.

Die Erfindung gemäß einem der vorstehend beschriebenen Aspekte bzw. gemäß einer der vorstehend beschriebenen bevorzugten Ausführungsformen wird vorteilhaft weitergebildet, indem die Plattform mehrere Rollen aufweist, welche sich zumindest abschnittsweise aus einer Ladeoberfläche der Plattform heraus erstrecken. Die auf diese Weise an der Oberseite der Plattform angeordneten Rollen erleichtern die Bewegung von Ladungsgütern, beispielsweise von Paletten oder Kartons auf der Ladeoberfläche. Es besteht somit die Möglichkeit, die Ladungsstücke einfach über die Plattform hinweg zu rollen, oder auf sie herauf bzw. von ihr herunter zu transportieren. Dies kann vorzugsweise mittels eines Staplers erfolgen, oder besonders bevorzugt durch ein Kippen, worunter einseitiges Anheben einer Stirnfläche der Plattform verstanden wird. Durch die hierdurch erzeugte Schräglage der Plattform beginnen die Ladungsstücke entlang der Rollen auf der Ladeoberfläche in Richtung des erzeugten Gefälles zu verfahren.

Vorzugsweise sind die Rollen jeweils allein oder zu mehreren in den Rollenkästen oder in separaten Rollenkästen eingelassen. Insbesondere in dem Fall, in welchem die Rollen für die Oberseite der Plattform in denselben Rollenkästen wie die Rollen für die Unterseite der Plattform angeordnet sind, ist ein Austausch aller Rollen gleichzeitig mit geringem Zeitaufwand ermöglicht. Alternativ dazu erweist sich das Anordnen der oberseitigen Rollen in jeweils separaten Rollenkästen dahingehend als vorteilhaft, dass ein einzelner Austausch defekter Rollen ermöglicht wird, ohne dass alle Rollen oder eine große Anzahl Rollen ausgetauscht werden müssen, die ansich noch intakt wären.

Die Rollen sind vorzugsweise in zwei oder mehr Hauptreihen, sowie weiter vorzugsweise in einer oder mehreren Nebenreihen in Längsrichtung der Plattform nebeneinander angeordnet. Die Abstände zweier benachbarter Reihen (Haupt- und/oder Nebenreihe) auf der Ladeoberfläche der Plattform liegen vorzugsweise jeweils in einem Bereich von 400 mm oder weniger. Die Beabstandung von 400 mm oder weniger ist vor dem Hintergrund besonders vorteilhaft, dass eine Länge von 800 mm der kürzeren Kantenlänge einer Europoolpalette nach EN 13698-1, auch bezeichnet als Europalette, entspricht. Bei einem Abstand von der Hälfte oder weniger jener Kantenlänge liegen auf der Plattform angeordnete Europoolpaletten somit immer mindestens auf zwei Rollen nebeneinander, wodurch ein stabiler Transport der Ladungsstücke gewährleistet wird. Je kleiner die erwartete zu transportierende Ladung ist, desto geringer wird vorzugsweise der Abstand zwischen zwei benachbarten Reihen auf der Oberseite der Plattform - der Ladeoberfläche - gewählt. Der Abstand der Reihen zueinander ist zudem vorzugsweise über Umsetzen der entsprechenden Rollenkästen einstellbar.

In einer weiteren bevorzugten Ausführungsform sind die in die Plattform eingelassenen Rollenkästen auf dem wenigstens einen ersten Plattformelement in einem ersten Abstand zueinander angeordnet, und auf dem wenigstens einen zweiten Plattformelement in einem zweiten, von dem ersten Abstand verschiedenen Abstand angeordnet. Weiter vorzugsweise weist die Plattform eine Vielzahl erster und zweiter Plattformelemente auf, die alternierend zueinander angeordnet und miteinander verriegelt sind. Dies birgt insbesondere in Verbindung mit der vorstehend erläuterten Beabstandung der Rollenkästen in unterschiedlicher Art und Weise für das erste Plattformelement und das zweite Plattformelement den Vorteil, dass die Plattform - betrachtet in Längsrichtung der Plattform - nicht auf zwei Reihen von Rollen, sondern vielmehr auf vier Reihen von Rollen gelagert ist, wodurch die Stabilität der Plattform signifikant verbessert wird.

In noch einer weiteren bevorzugten Ausführungsform der Erfindung sind die ersten und zweiten Plattformelemente mittels jeweils zwischen zwei benachbarten Plattformelementen angeordneten Sicherungsbolzen in Querrichtung der Plattform relativ zueinander fixiert, und vorzugsweise parallel zueinander sowie in Längsrichtung der Plattform fluchtend angeordnet. Durch Vorsehen von Sicherungsbolzen, vorzugsweise jeweils gegenüberliegend entlang des Randes der Plattform an deren Unter- und/oder Oberseite wird das Positionieren benachbarter Plattformelemente zum einfacheren und schnelleren Verriegeln erleichtert.

Ausführungsbeispiele und Vorteile der Erfindung werden nachstehend unter Bezugnahme auf folgende Figuren näher erläutert:
- Fig. 1: zeigt eine Draufsicht auf eine Plattform;
- Fig. 2: zeigt die Plattform in einer Ansicht von unten;
- Fig. 3: zeigt eine perspektivische Ansicht der Plattform von oben;
- Fig. 4: zeigt eine weitere perspektivische Draufsicht der Plattform von oben;
- Fig. 5: zeigt im oberen Bereich eine Seitenansicht der Plattform und im unteren Bereich zwei Detailansichten der linken bzw. rechten Kante der Plattform;
- Fig. 6: zeigt eine weitere Detailansicht der Plattform;
- Fig. 7: zeigt eine Draufsicht auf eine Plattform gemäß einem weiteren Ausführungsbeispiel der Erfindung;
- Fig. 8: zeigt eine Detailansicht der Draufsicht aus Fig. 7;
- Fig. 9: zeigt eine räumliche Darstellung einer beladenen Plattform gemäß den Figuren 7 und 8;
- Fig. 10: zeigt eine vereinfachte Detailansicht (seitlich) der Plattform gemäß den Figuren 7 bis 9; und
- Fig. 11: zeigt eine Draufsicht (von unten) auf die Plattform gemäß den Figuren 7 bis 10.

Soweit für beide gezeigten Ausführungsbeispiele strukturell und/oder funktional ähnliche oder identische Teile vorkommen, werden identische Bezugszeichen vergeben. Insoweit wird jeweils auf die Ausführungen des jeweiligen Ausführungsbeispiels verwiesen.

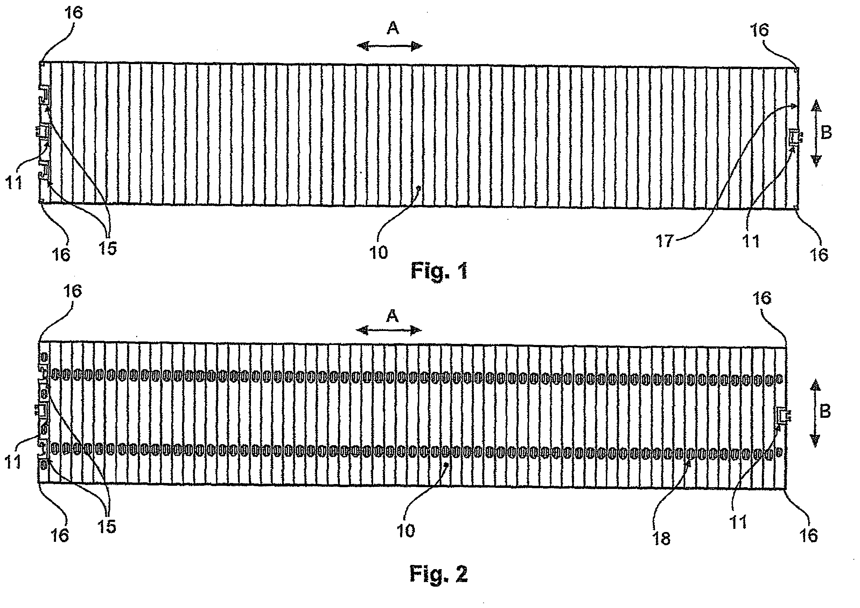

Fig. 1 zeigt eine Draufsicht auf eine Plattform 10. Die Plattform 10 kann auch als Ladungsträger 10 oder Güterplattform 10 bezeichnet werden. Die Plattform 10 ist im Wesentlichen an die Ausmaße der Ladefläche eines Fahrzeugs, z. B. eines Lkws oder Anhängers oder Aufliegers angepasst. So kann beispielsweise die Plattform 10 in ihrer Längsrichtung A eine Länge von 13,405 m und in ihrer Querrichtung B eine Breite von 2,440 m aufweisen.

Die Plattform 10 ist dazu vorgesehen, die Ladefläche eines Fahrzeugs nachzubilden. So kann die Plattform 10 z. B. im Rahmen eines Logistiksystems dazu verwendet werden, mit Gütern beladen auf die Ladefläche eines Fahrzeugs verfahren oder von der Ladefläche des Fahrzeugs heruntergefahren zu werden. Hierdurch lässt sich der Vorgang des Be- bzw. Entladens eines Fahrzeugs mit Gütern erheblich beschleunigen, da nicht die Ladefläche des Fahrzeugs z. B. palettenweise durch einen Gabelstapler ent- bzw. beladen werden muss, sondern die Ladefläche des Fahrzeugs als Ganzes in Form der Plattform 10 ausgetauscht werden kann.

Die Plattform 10 wird hierzu in der Beförderungsrichtung A verfahren. Die Plattform 10 weist hierzu an ihrer Unterseite eine Vielzahl von Rollen 19 auf, die in Rollenkästen 18 aufgenommen werden (siehe Fig. 2). Auf ihrer Oberseite ist die Plattform 10 im Wesentlichen als ebene und glatte Fläche ausgebildet, damit Waren z. B. auf Paletten flexibel auf der Plattform 10 angeordnet werden können. Dabei können auf der Oberfläche der Plattform 10 Halterungspunkte oder Laschpunkte vorgesehen sein, um eine Befestigung der Güter auf der Oberfläche der Plattform 10 zu ermöglichen. Ferner kann die Oberfläche der Plattform 10 mit Rillen oder Vertiefungen ausgestaltet sein, um die Rauigkeit der Oberfläche der Plattform 10 zu erhöhen. Hierdurch kann, insbesondere bei Feuchtigkeit, die Rutschgefahr z. B. für Personen oder auch Gabelstapler verringert werden.

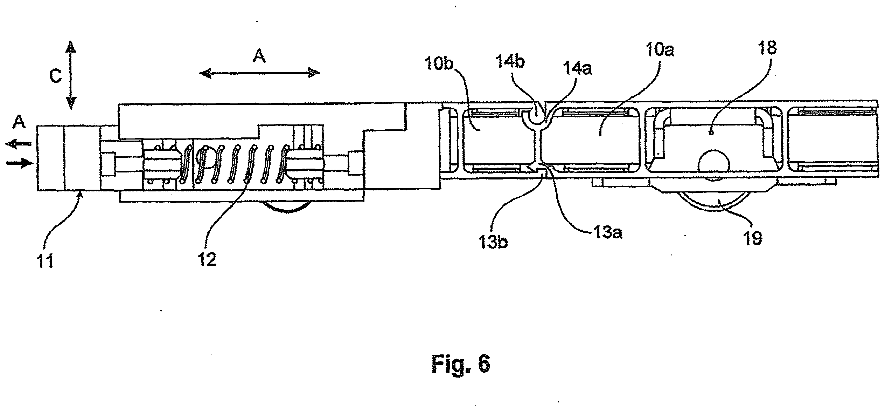

Um von der Ladefläche herunter bzw. aus einer Übergabestation herausgezogen zu werden, weist die Plattform 10 an zumindest einer ihrer schmalen Kanten wenigstens ein Eingriffsmittel 11 auf, welches z. B. als Zuglasche 11 ausgebildet sein kann. Die Zuglasche 11 ragt dabei über die Kante der Plattform 10 in der Beförderungsrichtung A, d.h. in Längsrichtung A, wenigstens soweit heraus, dass ein Beförderungsmittel wie z. B. ein Haken in die Zuglasche 11 eingreifen kann, um die Plattform 10 In der Beförderungsrichtung A zu ziehen. Hierbei ist die Zuglasche so vorzusehen, dass sie auch bei einer bis an die Kante beladenen Plattform 10 gegriffen werden kann, d.h. nicht durch die Waren auf der Plattform 10 derart verdeckt wird, dass der Haken nicht in die Zuglasche 11 eingreifen kann. Auch ist die Zuglasche 11 derart vorgesehen, dass sie eine Druckfeder 12 aufweist und z. B. durch das Hochklappen einer Laderampe eines Lkws zumindest soweit in die Plattform 10 eingedrückt werden kann, dass die Laderampe des Lkws sich vollständig schließen kann, d.h. dass die Zuglasche 11 beim Schließen der Ladefläche nicht der Laderampe oder auch den Toren oder dergleichen der Ladefläche im Wege ist (siehe auch Fig. 6).

Die Plattform 10 weist an wenigstens einer ihrer schmalen Kanten wenigstens eine Plattformsicherung 15 auf, die z. B. als Lasche 15 vorgesehen sein kann. Die Lasche 15 dient als Aufnahme für eine Ladungsträgersicherung, welche die Plattform 10 gegenüber der Ladefläche des Lkws derart verbinden kann, dass insbesondere während der Fahrt des Lkws eine Bewegung der Plattform 10 auf der Ladefläche des Lkws in Beförderungsrichtung A verhindert wird. Hierzu kann die Ladefläche des Lkws z. B. entsprechende Vertiefungen aufweisen, in die z. B. Sicherungsbolzen durch die Lasche 15 hindurch eingreifen.

Die Plattform 10 weist ferner an ihrer der Plattformsicherung 15 gegenüberliegenden schmalen Kante wenigstens eine Aufnahmebohrung 17 auf, in der ein Endanschlag und bzw. oder eine Abrollsicherung vorgesehen werden können.

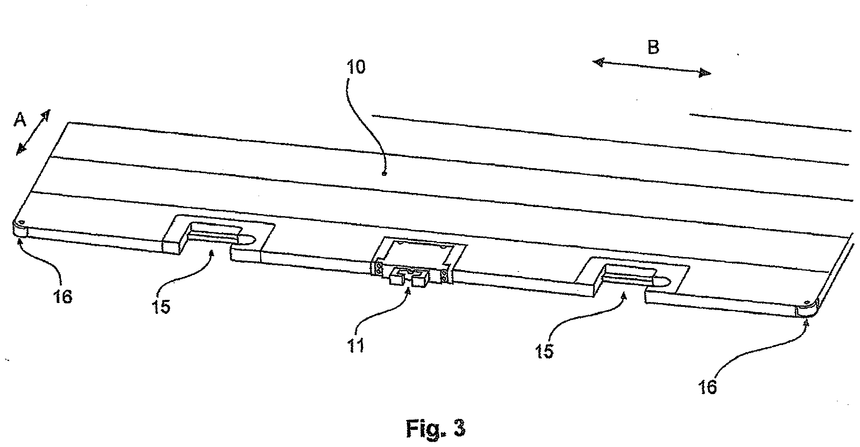

Ferner zeigt die Fig. 1 an allen vier Ecken der Plattform 10 seitliche Rollen 16, die sowohl in Längs- als auch in Querrichtung derart geringfügig über die Maße der Plattform 10. hinausragen, dass sie die Plattform 10 z. B. gegenüber einer Seitenwand der Ladefläche eines Lkws abrollen lassen können, jedoch die Maße der Plattform 10 nicht wesentlich vergrößern (siehe auch Fig. 3 bis 6).

Fig. 2 zeigt die Plattform 10 in einer Ansicht von unten. Die Elemente und Bezugszeichen entsprechen denen der Fig. 1. Ferner zeigt die Figur 2 die in die Unterseite der Plattform 10 eingelassenen Rollenkästen 18, in denen die Rollen 19 vorgesehen sind.

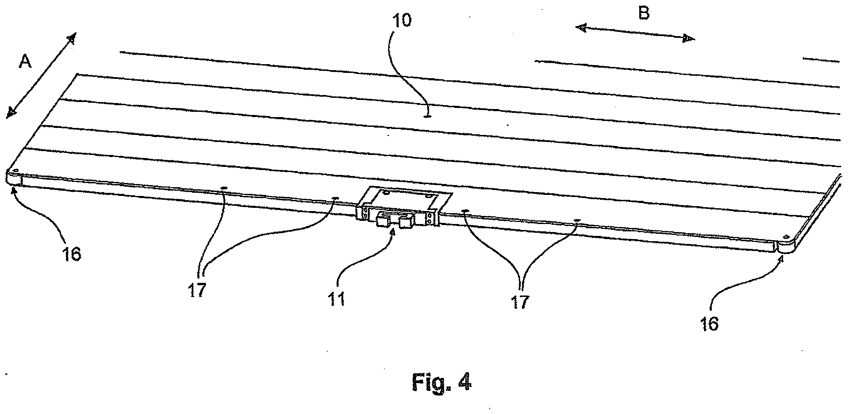

Fig. 3 zeigt eine perspektivische Ansicht der Plattform 10 von oben. Fig. 4 zeigt eine weitere perspektivische Draufsicht der Plattform 10 von oben. Die Fig. 3 zeigt dabei die linke Kante der Plattform 10 der Fig. 1 und 2, die z. B. zur Öffnung der Ladefläche eines Lkws ausgerichtet ist. Die Fig. 4 zeigt die rechte Kante der Plattform 10 der Fig. 1 und 2, die dem Inneren der Ladefläche eines Lkws zugewandt ist. Die Elemente und Bezugszeichen der Fig. 3 und 4 entsprechen denen der Fig. 1 und 2.

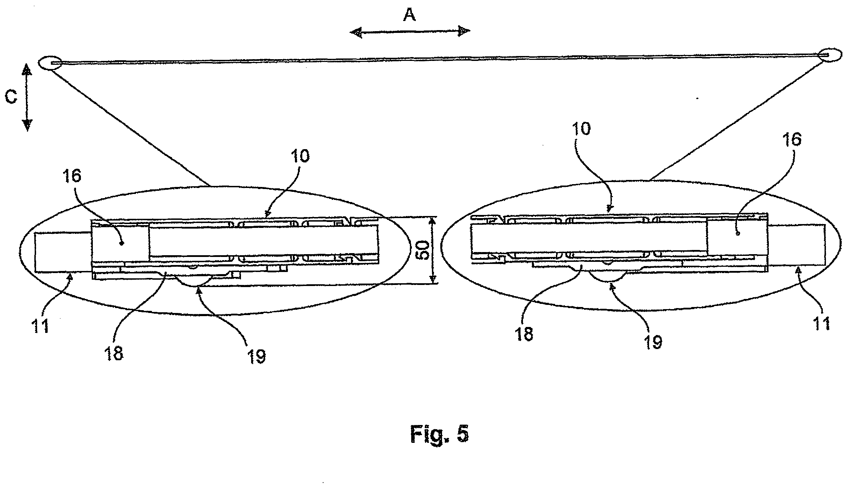

Fig. 5 zeigt im oberen Bereich eine Seitenansicht der Plattform 10 und im unteren Bereich zwei Detailansichten der linken bzw. rechten Kante der Plattform 10. Die Elemente und Bezugszeichen entsprechen dabei denen der Fig. 1 bis 4. In den beiden unteren Detailansichten der Fig. 5 ist jeweils die Anordnung der seitlichen Rolle 16 dargestellt, die jeweils derart vorgesehen ist, dass sie um die vertikale Achse C drehbar und an einer Ecke der Plattform 10 vorgesehen ist. Die Zuglasche 11 ist in einem Zustand dargestellt, in dem sie über die Plattform 10 in Beförderungsrichtung A herausragt.

Ferner Ist dargestellt, dass die Rollen 19 in den Rollenkästen 18 in die Plattform 10 derart eingelassen sind, dass sie lediglich geringfügig über die Unterseite der Plattform 10 hinausragen. Hierdurch kann eine möglichst flache und kompakte Bauweise der Plattform 10 erreicht werden, so dass durch die Plattform 10 der Ladefläche des Lkws lediglich eine geringe Höhe in Anspruch genommen wird.

Fig. 6 zeigt eine weitere Detailansicht der Plattform 10. Dargestellt sind die Elemente, die sich im Inneren der linken Kante der Plattform 10, d. h. der dem Heck eines Lkws, d.h. zur Öffnung der Ladefläche eines Lkws zugewandten Seite befinden. So ist die Zuglasche 11 mit der Druckfeder 12 dargestellt. Die Kante der Plattform 10 ist dabei derart gestaltet, dass in der Plattform 10 eine Aussparung oder ein Hohlraum vorgesehen ist, indem die Druckfeder 12 gegen einen Endanschlag derart vorgesehen ist, dass sie durch die Zuglasche 11 in Beförderungsrichtung A eingedrückt werden kann. Dabei ist die Aussparung der Plattform 10 sowie die Dimensionierung der Federkraft der Druckfeder 12 derart vorzusehen, dass die Zuglasche 11 zumindest soweit in die Aussparung der Plattform 10 eingedrückt werden kann, dass sie z. B. das Schließen der Ladefläche des Lkws nicht behindert. Dabei kann das Eindrücken der Zuglasche 11 z. B. durch das Hochklappen einer Laderampe des Lkws erfolgen. Auch kann die Zuglasche 11 in die Plattform 10 durch das Schließen der Türen der Ladefläche erfolgen.

Eine Besonderheit der erfindungsgemäßen Plattform 10 ist es, dass diese modular aus einzelnen Elementen aufgebaut werden kann. Hierdurch kann sehr einfach eine Plattform 10 in verschiedenen Längen bereitgestellt werden, um die erfindungsgemäße Plattform 10 an die Länge einer Ladefläche eines Fahrzeugs anzupassen. Hierzu wird erfindungsgemäß das Prinzip des Zusammenklickens einzelner Plattformelemente 10a, 10b verwendet.

Hierzu weist ein erstes Plattformelement 10a ein Verriegelungselement 13a auf, welches In eine Verriegelungsaufnahme 13b des zweiten Plattformelements 10b einrasten kann. In der Fig. 6 ist das Verriegelungselement 13a als Haken vorgesehen, welches hinter eine Kante greift und dort einrastet, die der Verriegelungsaufnahme 13b entspricht. Dabei ist das Verriegelungselement 13a derartig ausgestaltet, dass es beim Zusammenführen des ersten Verriegelungselements 13a mit dem zweiten Verriegelungselement 13b durch die Verriegelungsaufnahme 13b zunächst von dieser weggedrückt wird und schließlich in dieser Verriegelungsaufnahme 13b einrastet, um das erste Plattformelement 10a und das zweite Plattformelement 10b miteinander zu verriegeln. Zum Lösen dieser Verriegelung kann das Verriegelungselement 13a wieder gegenüber der Verriegelungsaufnahme 13b angehoben und hierdurch gelöst zu werden.

Die Plattform 10 der Fig. 6 weist ferner an dem ersten Plattformelement 10a eine Aussparung 14a auf, in die ein Vorsprung 14b des zweiten Plattformelements 10b eingeführt werden kann. Der Vorsprung 14b und die Aussparung 14a sind dabei derart vorgesehen, dass das zweite Plattformelement 10b gegenüber dem ersten Plattformelement 10a eine Schwenkbewegung um die Querrichtung B der Plattform 10 ausführen kann. Dabei sind die Aussparung 14a und der Vorsprung 14b an der Oberseite der Plattform 10 vorgesehen und das Verriegelungselement 13a und die Verriegelungsaufnahme 13b an der Unterseite der Plattform 10. Hierdurch kann das zweite Plattformelement 10b mit seinem Vorsprung 14b in die Aussparung 14a des ersten Plattformelementes 10a von oben eingesetzt werden, um die beiden Plattformelemente 10a, 10b zunächst zueinander zu positionieren. Dabei ist das zweite Plattformelement 10b gegenüber dem ersten Plattformelement 10a bzw. gegenüber der horizontalen Ebene z. B. um einen Winkel von 45 Grad hochgeklappt. Aus dieser Position kann nun das zweite Plattformelement 10b um die Achse B in die Horizontale heruntergeklappt werden. Dabei wird das Verriegelungselement 13a durch die Verriegelungsaufnahme 13b zunächst angehoben, bis das Verriegelungselement 13a z. B. als Haken in der Verriegelungsaufnahme 13b z. B. als Kante einrastet. Hierdurch werden die beiden Plattformelemente 10a, 10b ähnlich miteinander verbunden.

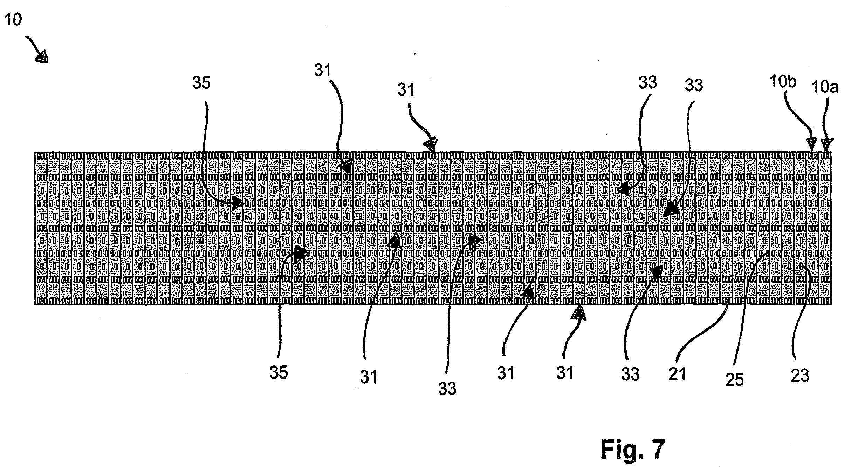

Ein weiteres Ausführungsbeispiel der erfindungsgemäßen Plattform 10 ist in den Figuren 7 bis 11 abgebildet. Figur 7 zeigt zunächst eine Draufsicht auf die Plattform 10 gemäß diesem Ausführungsbeispiel. Die Plattform 10 besteht aus einer Vielzahl aneinandergereihter und miteinander verbundener Plattformelemente 10a, 10b. Die Plattformelemente sind jeweils alternierend zueinander angeordnet und miteinander fixiert. Figur 7 gibt den Blick frei auf die Oberseite der Plattform 10 in verwendungsgemäßer Orientierung. Die Oberseite der Plattform weist eine Mehrzahl von in Reihen angeordneten Rollen 21, 23, 25 auf. Zwecks einfacher Darstellung ist jeweils nur eine der Rollen mit einem Bezugszeichen versehen. Die ersten Rollen 21 sind in mehreren Hauptreihen 31 angeordnet. Die Plattform 10 weist mehrere, nämlich fünf Hauptreihen 31 auf, die nebeneinander in Längsrichtung der Plattform 10 parallel zueinander ausgerichtet sind. des Weiteren weist die Plattform 10 mehrere erste Nebenreihen 33 und zweite Nebenreihen 35 auf. Die ersten Nebenreihen 33 weisen die zweiten Rollen 23 auf, welche zueinander in einem größeren Abstand in Längsrichtung der Plattform 10 angeordnet sind als die ersten Rollen 21 der Hauptreihen 31. Die zweiten Nebenreihen 35, von denen die Plattform 10 im vorliegenden Ausführungsbeispiel zwei Stück aufweist, bestehen aus den dritten Rollen 25. Die dritten Rollen 25 sind zueinander in einem höheren Abstand als die ersten Rollen 21, allerdings in einem geringeren Abstand als die zweiten Rollen 23 angeordnet. Die Jeweiligen Rollen sind den Plattformelementen 10a, 10b jeweils derart zugeordnet, dass drei erste Rollen 21 hintereinander (in Längsrichtung der Plattform 10) auf einem Plattformelemente 10a, 10b angeordnet sind, dass weiterhin zwei dritte Rollen 25 hintereinander (in Längsrichtung der Plattform 10) auf jedem Plattformelement 10a, 10b angeordnet sind, und dass schließlich jeweils eine weitere Rolle 23 (in Längsrichtung der Plattform 10) auf einem jeden Plattformelement 10a, 10b angeordnet ist. In Querrichtung der Plattform 10 betrachtet befinden sich auf jedem Plattformelement nebeneinander fünf Sätze erster Rollen 21, vier Sätze zweiter Rollen 23 und zwei Sätze dritter Rollen 25, wobei die Sätze der ersten Rollen 21 aus je drei Rollen, die Sätze der zweiten Rollen 23 aus je einer Rolle und die Sätze der dritten Rollen 25 aus je zwei Rollen bestehen.

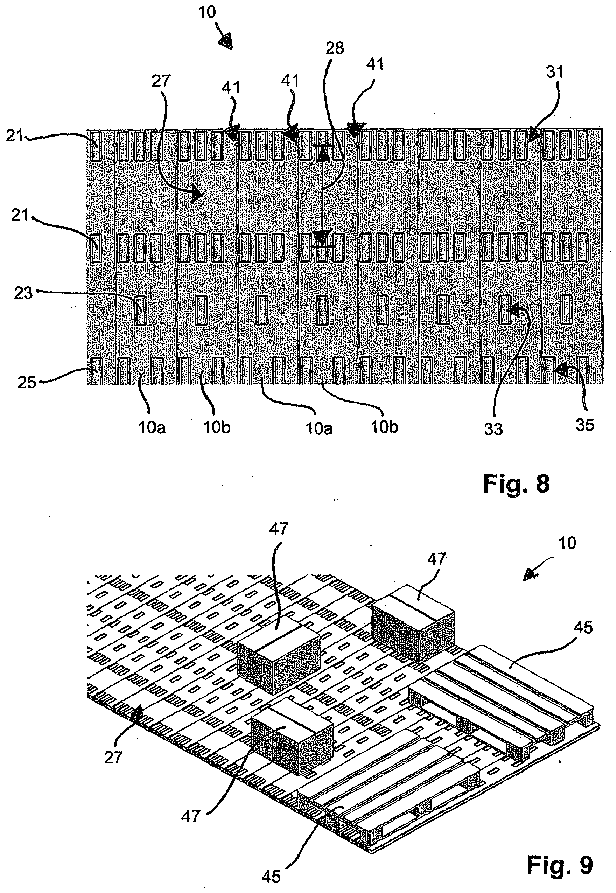

Die Anordnung der Rollen ist im Detail auch Figur 8 zu entnehmen. Der in Figur 8 dargestellte Detailausschnitt der Ladeoberfläche 27 der Plattform 10 zeigt insbesondere auch die Anordnung der Plattformelemente 10a, 10b in alternierender Folge. Die Plattformelemente 10a, 10b sind mittels Sicherungsbolzen 41 relativ zueinander positioniert und in Längsrichtung der Plattform 10 fluchtend zueinander ausgerichtet. Angedeutet ist zudem ein Abstand 28 zwischen zwei benachbarten Reihen von Rollen, in diesem Fall der Abstand zweier benachbarter Hauptreihen 31 bestehend aus ersten Rollen 21. Erfindungsgemäß ist dieser Abstand kleiner oder gleich 400 mm.

Die Funktionsweise der ersten, zweiten und dritten Rollen auf der Ladeoberfläche 27 der Plattform 10 ist in Figur 9 angedeutet. Die Abstände der Haupt- und Nebenreihen, die in den Figuren 7 und 8 im Detail gezeigt ist, ermöglicht einen Transport beispielsweise von Kartons 47 oder Paletten 45, die vorzugsweise als Europoolpaletten mit einer Kantenlänge von im Wesentlichen 800 mm x 1200 mm ausgebildet sind derart, dass immer mindestens zwei nebeneinander befindliche Rollen die Ladungsstücke 45, 47 stützen und so ein leichtes Verschieben entlang der Plattform 10 ermöglichen.

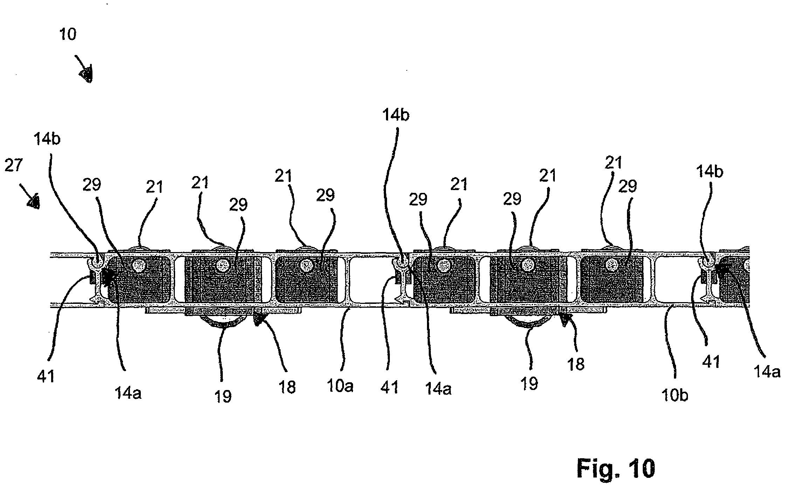

Fig. 10 verdeutlicht nochmals die Anordnung der alternierend zueinander angeordneten und miteinander gekoppelten Plattformelemente 10a, 10b. Bezüglich der Aussparungen 14a und Vorsprünge 14b wird auf die vorstehenden Ausführungen verwiesen. Auf der Oberseite der Plattform 10, also auf Seiten der Ladeoberfläche 27 sind je drei erste Rollen 21 in jeweils separaten Rollenkästen 29 eingelassen. Auf der gegenüberliegenden, unteren Seite der Plattform 10 sind die Rollen 19 in Rollenkästen 18 untergebracht. Im Verbindungsbereich zwischen zwei benachbarten Plattformelementen 10a, 10b sind jeweils die Sicherungsbolzen 41 angeordnet, vorzugsweise derart, dass sie mit zwei jeweils korrespondierenden Aussparungen in den benachbarten Plattformelementen 10a, 10b korrespondieren, um die gewünschte Positionierung in Querrichtung der Plattform 10 zu ermöglichen.

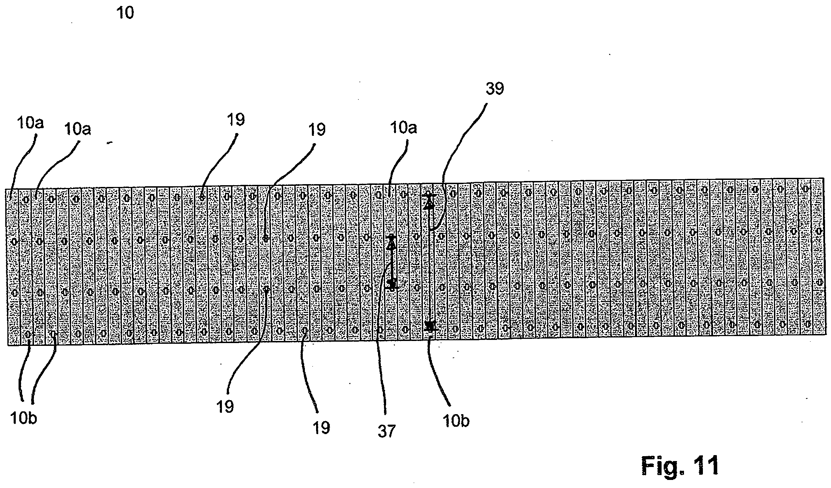

Die schließlich in Fig. 11 gezeigte Unterseite der Plattform 10 zeigt eine bevorzugte alternative Anordnung der Rollen 19 zum Tragen der Plattform 10 gemäß dem zweiten Ausführungsbeispiel der Figuren 7 bis 10. Die alternierend angeordnete Vielzahl von Plattformelementen 10a, 10b weist voneinander abweichende Abstände zwischen den jeweils auf einem Plattformelement 10a, 10b angeordneten Rollen 19 auf. Hierbei sind die Rollen auf den Plattformelementen 19 in einem ersten Abstand 37 zueinander angeordnet, wohingegen die Rollen 19 auf dem zweiten Plattformelement 10b jeweils in einem zweiten Abstand 39 zueinander angeordnet sind, welcher sich von dem ersten Abstand 37 der Rollen 19 auf dem Plattformelement 10a unterscheidet. Vorzugsweise ist der Abstand 39 zwei bis drei Mal so groß wie der Abstand 37. Hierdurch wird eine bessere Lastverteilung auf die Vielzahl der Rollen 19 - bezogen auf die gesamte Fläche der Plattform 10 - erreicht, wodurch eine höhere Stabilität der Plattform 10 insgesamt gewährleistet ist.

## Patentansprüche

1. Logistiksystem-Plattform (10) welche dazu eingerichtet ist, auf die Ladefläche eines Fahrzeugs in einer Beförderungsrichtung (A) übergeben und von der Ladefläche eines Fahrzeugs in einer Beförderungsrichtung (A) übernommen zu werden,
wobei die Plattform (10) im Wesentlichen Ausmaße aufweist, die der Ladefläche des Fahrzeugs angepasst sind,
wobei die Plattform (10) wenigstens ein erstes Plattformelement (10a) und ein zweites Plattformelement (10b) aufweist, die miteinander verriegelbar aber auch voneinander lösbar sind,
**dadurch gekennzeichnet, dass**
das erste Plattformelement (10a) ein Verriegelungselement (13a) und das zweite Plattformelement (10b) eine dem Verriegelungselement (13a) gegenüberliegend vorgesehene Verriegelungsaufnahme (13b) derart aufweisen, dass die Verriegelungsaufnahme (13b) des zweiten Plattformelements (10b) in das Verriegelungselement (13a) des ersten Plattformelements (10a) einrasten kann, wobei das erste Plattformelement (10a) eine Aussparung (14a) aufweist, in die ein Vorsprung (14b) des zweiten Plattformelements (10b) durch eine Schwenkbewegung des zweiten Plattformelements (10b) relativ zu dem ersten Plattformelement (10a) um eine horizontale Achse (B) senkrecht zur Beförderungsrichtung (A) eingreifen kann.

2. Logistiksystem-Plattform (10) nach Anspruch 1,
wobei die Plattform (10) an wenigstens einer seitlichen Kante eine um die vertikale Achse (C) drehbar vorgesehene Rolle (19) aufweist, die über die seitlichen Ausmaße der Plattform (10) hervortretend ausgebildet ist.

3. Logistiksystem-Plattform (10) nach Anspruch 2,
wobei wenigstens eine Rolle (19) an einer Ecke der Plattform (10) vorgesehen ist.

4. Logistiksystem-Plattform (10) nach einem der vorstehenden Ansprüche,
wobei die Plattform (10) ein Eingriffsmittel (11) aufweist, in das ein Beförderungsmittel eingreifen kann, um die Plattform (10) von der Ladefläche des Fahrzeugs in der Beförderungsrichtung (A) zu ziehen.

5. Logistiksystem-Plattform (10) nach Anspruch 4,
wobei die Plattform (10) eine Druckfeder (12) aufweist, um das Eingriffsmittel (11) in der Beförderungsrichtung (A) aus der Plattform (10) herauszudrücken.

6. Logistiksystem-Plattform (10) nach Anspruch 5,
wobei die Plattform (10) derart vorgesehen und die Druckfeder (12) derart dimensioniert ist, dass das Eingriffsmittel (11) vollständig in die Plattform (10) hineingedrückt und durch die Plattform (10) aufgenommen werden kann.

7. Logistiksystem-Plattform (10) nach einem der vorherigen Ansprüche,
wobei die Plattform (10) mehrere in Rollenkästen (18) eingelassene Rollen (19) aufweist, um auf diesen Rollen (19) in der Beförderungsrichtung (A) verfahren zu werden.

8. Logistiksystem-Plattform (10) nach Anspruch 7,
wobei die Plattform mehrere Rollen (21, 23, 25) aufweist, welche sich zumindest abschnittsweise aus einer Ladeoberfläche (27) der Plattform heraus erstrecken.

9. Logistiksystem-Plattform (10) nach Anspruch 8,
wobei die Rollen (21, 23, 25) jeweils allein oder zu mehreren in den Rollenkästen (18) oder in separaten Rollenkästen (29) eingelassen sind.

10. Logistiksystem-Plattform (10) nach Anspruch 8 oder 9,
wobei die Rollen (21) in zwei oder mehr Hauptreihen (31), sowie einer oder mehreren Nebenreihen (33,35) in Längsrichtung der Plattform nebeneinander angeordnet sind.

11. Logistiksystem-Plattform (10) nach Anspruch 10,
wobei die Abstände zweier benachbarter Reihen (31, 33, 35) auf der Ladeoberfläche (27) der Plattform (10) jeweils in einem Bereich von 400 mm oder weniger liegen.

12. Logistiksystem-Plattform (10) nach einem der Ansprüche 7 bis 11,
wobei die in die Plattform eingelassenen Rollenkästen (18) auf dem wenigstens einen ersten Plattformelement (10a) in einem ersten Abstand (37) zueinander angeordnet sind, und auf dem wenigstens einen zweiten Plattformelement (10b) in einem zweiten, von dem ersten Abstand verschiedenen Abstand (39) angeordnet sind.

13. Logistiksystem-Plattform (10) nach Anspruch 12,
wobei die Plattform eine Vielzahl erster und zweiter Plattformelemente (10a, 10b) aufweist, die alternierend zueinander angeordnet und miteinander verriegelt sind.

14. Logistiksystem-Plattform (10) nach einem der vorstehenden Ansprüche,
wobei die ersten und zweiten Plattformelemente (10a, 10b) mittels jeweils zwischen zwei benachbarten Plattformelementen angeordneten Sicherungsbolzen (41) in Querrichtung der Plattform (10) relativ zueinander fixiert sind, vorzugsweise parallel zueinander und in Längsrichtung der Plattform fluchtend.

## Claims

1. A platform (10) of a logistics system that is configured to be transferred onto the loading area of a vehicle in a haulage direction (A) and/or to be received from the loading area of a vehicle in a haulage direction (A),
wherein the platform (10) essentially has dimensions which are adapted to the loading area of the vehicle,
wherein the platform (10) has at least one first platform element (10a) and one second platform element (10b), which can be locked to one another, but can also be released from one another,
**characterized in that**
the first platform element (10a) has a locking element (13a) and the second platform element (10b) has a locking holder (13b), provided opposite the locking element (13a), such that the locking holder (13b) of the second platform element (10b) can latch into the locking element (13a) of the first platform element (10a),
wherein the first platform element (10a) has a recess (14a) which a protrusion (14b) of the second platform element (10b) can engage by way of a pivoting movement about a horizontal axis (B) perpendicularly to the haulage direction (A).

2. The platform (10) of a logistics system as claimed in claim 1,
wherein on at least one lateral edge, the platform (10) has a roller (19) which is provided such that it can be rotated about the vertical axis (C) and is designed to protrude beyond the lateral dimensions of the platform (10).

3. The platform (10) of a logistics system as claimed in claim 2,
wherein at least one roller (19) is provided at a corner of the platform (10).

4. The platform (10) of a logistics system as claimed in one of the preceding claims, wherein the platform (10) has an engagement means (11), in which a haulage means can engage in order to pull the 25 platform (10) from the loading area of the vehicle in the haulage direction (A).

5. The platform (10) of a logistics system as claimed in claim 4,
wherein the platform (10) has a compression spring (12) for pushing the engagement means (11) to be pushed out of the platform (10) in the haulage direction (A).

6. The platform (10) of a logistics system as claimed in claim 5,
wherein the platform (10) is provided, and the compression spring (12) is dimensioned, such that the engagement means (11) can be pushed all the way into the platform (10) and accommodated by the platform (10).

7. The platform (10) of a logistics system as claimed in one of the preceding claims, wherein the platform (10) has a plurality of rollers (19) which are incorporated in roller casings (18), in order to be shifted on these rollers (19) in the haulage direction (A).

8. The platform (10) of a logistics system as claimed in claim 7,
wherein the platform has a plurality of rollers (21, 23, 25) which extend, at least in part, out of a loading surface (27) of the platform.

9. The platform (10) of a logistics system as claimed in claim 8,
wherein the rollers (21, 23, 25) are housed individually or in groups in the roller casings (18) or in separate roller casings (29).

10. The platform (10) of a logistics system as claimed in either of claims 8 or 9, wherein the rollers (21) are arranged one beside the other in the longitudinal direction of the platform in two or more main rows (31), and one or more secondary rows (33, 35).

11. The platform (10) of a logistics system as claimed in claim 10,
wherein the spacings between two adjacent rows (31, 33, 35) on the loading surface (27) of the platform (10) are each in the region of 400 mm or less.

12. The platform (10) of a logistics system as claimed in one of claims 7 to 11, wherein the roller casings (18), incorporated in the platform, on the at least one first platform element (10a) are arranged at a first spacing (37) from one another, and those on the at least one second platform element (10b) are arranged at a second spacing (39), which differs from the first spacing.

13. The platform (10) of a logistics system as claimed in claim 12,
wherein the platform has a multiplicity of first and second platform elements (10a, 10b), which are arranged to alternate with one another and are locked to one another.

14. The platform (10) of a logistics system as claimed in one of the preceding claims, wherein the first and second platform elements (10a, 10b) are fixed relative to one another in the transverse direction of the platform (10), preferably parallel to one another and in alignment in the longitudinal direction of the platform, by means of securing bolts (41), which are each arranged between two adjacent platform elements.

## Revendications

1. Plate-forme de système logistique (10), qui est mise au point pour être transférée sur la surface de chargement d'un véhicule dans une direction de transport (A) et pour être réceptionnée par la surface de chargement d'un véhicule dans une direction de transport (A),
dans laquelle la plate-forme (10) présente sensiblement des cotes qui sont adaptées à la surface de chargement du véhicule,
dans laquelle la plate-forme (10) présente au moins un premier élément de plate-forme (10a) et un deuxième élément de plate-forme (10b), qui peuvent être verrouillés l'un à l'autre tout en pouvant toutefois également être détachés l'un de l'autre,
**caractérisée en ce que**
le premier élément de plate-forme (10a) présente un élément de verrouillage (13a) et le deuxième élément de plate-forme (10b) présente un logement de verrouillage (13b) prévu de manière à faire face à l'élément de verrouillage (13a) de telle manière que le logement de verrouillage (13b) du deuxième élément de plate-forme (10b) peut s'enclencher dans l'élément de verrouillage (13a) du premier élément de plate-forme (10a),
dans laquelle le premier élément de plate-forme (10a) présente un évidement (14a) avec lequel une partie faisant saillie (14b) du deuxième élément de plate-forme (10b) peut venir en prise par un mouvement de pivotement du deuxième élément de plate-forme (10b) par rapport au premier élément de plate-forme (10a) autour d'un axe horizontal (B) de manière perpendiculaire par rapport à la direction de déplacement (A) .

2. Plate-forme de système logistique (10) selon la revendication 1,
dans laquelle la plate-forme (10) présente, au niveau d'au moins une arête latérale, une roulette (19) prévue de manière à pouvoir tourner autour de l'axe vertical (C), laquelle est réalisée de manière à dépasser des cotes latérales de la plate-forme (10).

3. Plate-forme de système logistique (10) selon la revendication 2,
dans laquelle au moins une roulette (19) est prévue au niveau d'un angle de la plate-forme (10).

4. Plate-forme de système logistique (10) selon l'une quelconque des revendications précédentes,
dans laquelle la plate-forme (10) présente un moyen de prise (11) avec lequel un moyen de transport peut venir en prise afin de tirer la plate-forme (10) depuis la surface de chargement du véhicule dans la direction de transport (A).

5. Plate-forme de système logistique (10) selon la revendication 4,
dans laquelle la plate-forme (10) présente un ressort de pression (12), afin de pousser le moyen de prise (11) hors de la plate-forme (10) dans la direction de transport (A) .

6. Plate-forme de système logistique (10) selon la revendication 5,
dans laquelle la plate-forme (10) est prévue de telle manière, et le ressort de pression (12) présente des dimensions telles, que le moyen de prise (11) peut être poussé en totalité à l'intérieur de la plate-forme (10) et peut être logé par la plate-forme (10).

7. Plate-forme de système logistique (10) selon l'une quelconque des revendications précédentes,
dans laquelle la plate-forme (10) présente plusieurs roulettes (19) intégrées dans des coffres à roulettes (18) afin d'être déplacée sur lesdites roulettes (19) dans la direction de transport (A).

8. Plate-forme de système logistique (10) selon la revendication 7,
dans laquelle la plate-forme présente plusieurs roulettes (21, 23, 25) qui s'étendent au moins par endroits en dehors d'une face supérieure de chargement (27) de la plate-forme.

9. Plate-forme de système logistique (10) selon la revendication 8,
dans laquelle les roulettes (21, 23, 25) sont intégrées respectivement individuellement ou par plusieurs dans les coffres à roulettes (18) ou dans des coffres à roulettes (29) séparés.

10. Plate-forme de système logistique (10) selon la revendication 8 ou 9,
dans laquelle les roulettes (21) sont disposées les unes à côté des autres dans deux rangées principales (31) ou plus, ainsi que dans une ou plusieurs rangées secondaires (33, 35) dans le sens longitudinal de la plate-forme.

11. Plate-forme de système logistique (10) selon la revendication 10,
dans laquelle les distances entre deux rangées (31, 33, 35) voisines sur la face supérieure de chargement (27) de la plate-forme (10) se situent respectivement dans une plage de 400 mm ou moins.

12. Plate-forme de système logistique (10) selon l'une quelconque des revendications 7 à 11,
dans laquelle les coffres à roulettes (18) intégrés dans la plate-forme sont disposés sur l'au moins un premier élément de plate-forme (10a) à une première distance (37) les uns par rapport aux autres et sur l'au moins un deuxième élément de plate-forme (10b) à une deuxième distance (39) différente de la première distance.

13. Plate-forme de système logistique (10) selon la revendication 12,
dans laquelle la plate-forme présente une pluralité de premiers et de deuxièmes éléments de plate-forme (10a, 10b) qui sont disposés en alternance les uns par rapport aux autres et qui sont verrouillés les uns aux autres.

14. Plate-forme de système logistique (10) selon l'une quelconque des revendications précédentes,
dans laquelle les premiers et deuxièmes éléments de plate-forme (10a, 10b) sont fixés les uns par rapport aux autres de manière relative dans le sens transversal de la plate-forme (10) au moyen respectivement de boulons de blocage (41) disposés entre deux éléments de plate-forme adjacents, de préférence de manière parallèle les uns par rapport aux autres et en affleurement dans le sens longitudinal de la plate-forme.
